(19)

**Europäisches Patentamt**
**European Patent Office**
**Office européen des brevets**

(11) **EP 2 629 536 A1**

(12) **EUROPEAN PATENT APPLICATION**
published in accordance with Art. 153(4) EPC

(43) Date of publication:
**21.08.2013 Bulletin 2013/34**

(51) Int Cl.:
***H04N 13/04*** (2006.01)        ***G06T 1/00*** (2006.01)

(21) Application number: **11832475.5**

(86) International application number:
**PCT/JP2011/073081**

(22) Date of filing: **06.10.2011**

(87) International publication number:
**WO 2012/050040 (19.04.2012 Gazette 2012/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2010 JP 2010229607**

(71) Applicant: **Sharp Kabushiki Kaisha**
**Osaka-shi, Osaka 545-8522 (JP)**

(72) Inventors:
• **ARITA, Shinichi**
  **Osaka 545-8522 (JP)**
• **SHIMURA, Tomoya**
  **Osaka 545-8522 (JP)**

(74) Representative: **Müller - Hoffmann & Partner Patentanwälte**
**Innere Wiener Strasse 17**
**81667 München (DE)**

(54) **STEREOSCOPIC IMAGE CONVERSION DEVICE AND STEREOSCOPIC IMAGE DISPLAY DEVICE**

(57) Provided is a stereoscopic image converting apparatus capable of displaying a stereoscopic image so that the disparity value in the receding direction is equal to or lower than a predetermined disparity, regardless of the size of a screen. A stereoscopic image converting apparatus (100) is provided with: an photographing condition extracting portion (111) for extracting convergent angle conversion information which is an image capturing condition when right/left images are captured; and an image converting portion (112) for changing the convergence angle of the time when the right/left images are captured. The image converting portion (112) is provided with: a convergent angle correction value calculating portion which calculates the maximum disparity value of the right/left images on the basis of the convergent angle conversion information extracted by the photographing condition extraction portion (111) and display size information of a display screen on which the right/left images are to be displayed, and calculates a convergent angle correction value at which the calculated maximum disparity value is equal to or lower than a previously designated maximum disparity value; and a convergent angle conversion processing portion which generates an image in which the convergent angle when the right/left images are captured is changed on the basis of the calculated convergent angle correction value.

FIG. 1

EP 2 629 536 A1

**Description**

TECHNICAL FIELD

The present invention relates to a stereoscopic image converting apparatus capable of conversion into, and display of, a stereoscopic image having a prescribed disparity value or less regardless of a screen size for display, and a stereoscopic image displaying apparatus including the apparatus.

BACKGROUND OF THE INVENTION

When a stereoscopic displaying apparatus is used for stereoscopic view of a stereoscopic image, different images fitted to respective viewpoints must be displayed for a left eye and a right eye. The different images are left and right images photographed with a binocular parallax and when the left and right images enter the respective eyes of a viewer stereoscopic view corresponding to a disparity value of the left and right images can be realized.

A disparity value of the left and right images is a key factor for a level of protrusion to the front side from a display plane or retraction in the rear direction from the display plane in stereoscopic view. For example, the protrusion to the front side from the displaying apparatus is achieved by displaying a right-eye image on the left relative to a left-eye image and the left-eye image on the right relative to the right-eye image. In this case, a larger disparity value of the left and right images causes a larger protrusion amount. An inverse disparity value enables display retracted to the rear side from the display plane of the displaying apparatus. For example, the retraction in the rear direction from the display plane in stereoscopic view can be achieved by displaying the right-eye image on the right relative to the left-eye image and the left-eye image on the left relative to the right-eye image. In this case, a larger disparity value of the left and right images causes a larger retraction amount in the rear direction. If the left and right images have no parallax, the images appear to be displayed on the display plane.

Therefore, a depth in stereoscopic view varies depending on a disparity value of the displayed left and right images. Care must be taken for a disparity value to be displayed since it is suggested that displaying with a larger disparity value may cause eyestrain or an inability of fusion (fusional limitation). Precautions for such a disparity value of stereoscopic display are presented in "3DC Safety Guidelines" published by 3D Consortium etc. Particular care must be taken for displaying an image retracted in the depth direction since this easily causes eyestrain because displaying with parallax equal to or greater than an interocular distance of a viewer causes left and right eyeballs to turn to the opening direction. When left and right images photographed and stored under the same photographing condition are displayed, a disparity value varies depending on a size of the displaying apparatus and, therefore, it is problematic that the images are displayed with larger parallax when viewed on a larger screen.

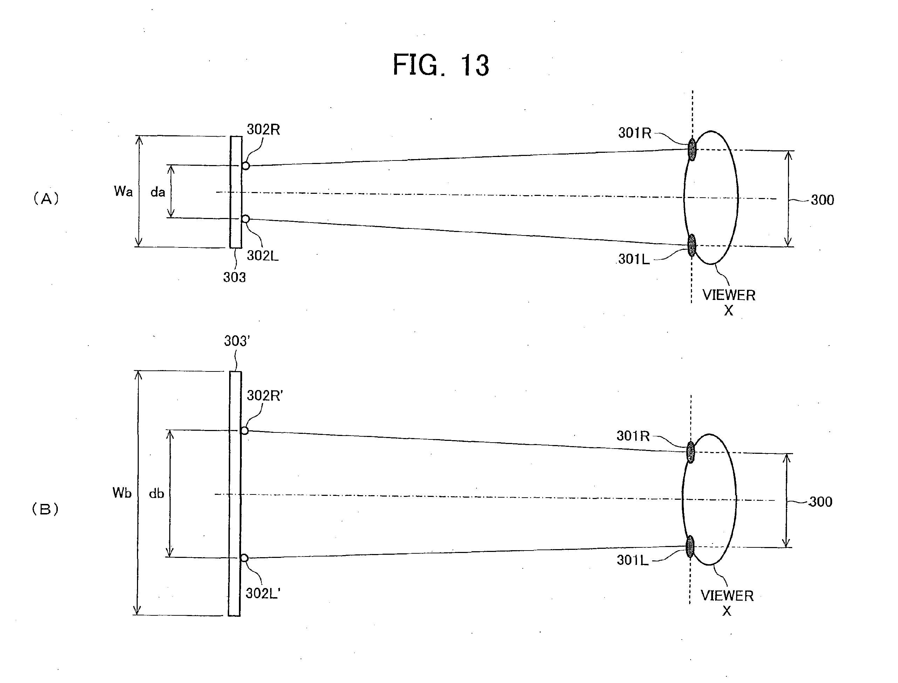

The problem of parallax due to a difference in screen size will be described with reference to Fig. 13. Figs. 13 (A) and 13 (B) are schematic diagrams of situations of viewing stereoscopic image displaying apparatuses with respective different screen sizes and, in Figs. 13(A) and 13(B), reference numeral 303 denotes a stereoscopic image displaying apparatus. In Figs. 13 (A) and 13 (B), viewing conditions other than a display size are the same and a viewer X having a binocular distance 300 views the stereoscopic image displaying apparatus 303 displaying the same left and right image data. In Fig. 13(A), the stereoscopic image displaying apparatus 303 has a screen width of Wa and, in Fig. 13(B), the stereoscopic image displaying apparatus 303 has a screen width of Wb, satisfying the relationship of Wa<Wb.

Since the image data are the same, object points 302L and 302R in the left and right images in Fig. 13(A) are displayed at respective object points 302L' and 302R' located in proportion to a screen size in Fig. 13(B). Although a disparity value of the object points is a disparity value da in Fig. 13 (A), the disparity value is enlarged and displayed depending on a display screen size as indicated by a disparity value db because of a change in screen size in the case of Fig. 13(b). Therefore, parallax equal to or greater than the binocular distance 300 may be generated as depicted in Fig. 13 (B). Therefore, even when left and right image data are the same, the size of display is important.

Parallax of photographed images will briefly be described. Stereoscopic imaging apparatuses which photograph left and right images include an imaging system with optical axes of two imaging apparatuses angled in convergent arrangement for varying a stereoscopic effect during stereoscopic image display. When the two imaging apparatuses are arranged left and right facing inward in a convergent manner, the relationship between the imaging visual field of the right imaging apparatus and the imaging visual field of the left imaging apparatus varies depending on a depth of an object. If the object is located on the near side, the imaging visual field of the right imaging apparatus and the imaging visual field of the left imaging apparatus are located on the right side and the left side, respectively, while the imaging visual field of the right imaging apparatus and the imaging visual field of the left imaging apparatus coincide with each other at a convergent point at which the optical axes of the left and right imaging apparatuses intersect with each other. In the case of an object on the far side, the imaging visual field of the right imaging apparatus and the imaging visual field of the left imaging apparatus are located on the left side and the right side, respectively, reversing the left-to-right relationship. If a displaying apparatus displays an image of the right imaging apparatus for the right eye and an image of the left imaging apparatus for the left eye, an object on the near side appears to be protruded on the front side from the displaying apparatus; an object at the convergent point appears at the same position as the display plane of the displaying apparatus; and an object on the far side appears to be retracted from the display plane of the displaying apparatus.

If the photographing condition of each of the imaging apparatuses is not changed, a position of the display plane and a disparity value are prescribed by a convergent angle, which is an angle formed by optical axes of such two imaging apparatuses, and the convergent point. Although it is characterized in that a sense of depth to an attention object is easily adjusted by adjusting the convergence, images photographed by imaging apparatuses arranged in a convergent manner is problematic that the parallax of a distant object such as a background tends to increase. Therefore, particular care must be taken for such images photographed in a convergent manner in terms of a disparity value in a screen size of display as described above.

With regard to the adjustment of a disparity value depending on a display size as described above, a technique is disclosed that calculates a disparity value for each of corresponding areas of left and right images to change relative positions, i.e., horizontal display positions of the left and right images photographed by imaging apparatuses in accordance with calculated disparity values for display (see, e.g., Patent Document 1). The technique described in Patent Document 1 is a technique of changing left and right relative positions of reproduced images to change a disparity value of the left and right images and a disparity value can be changed by reproducing the images at different display positions for each displaying apparatus.

PRIOR ART DOCUMENT

PATENT DOCUMENTS

Patent Document 1: Japanese Laid-Open Patent Publication No. 8-9421

SUMMARY OF THE INVENTION

PROBLEM TO BE SOLVED BY THE INVENTION

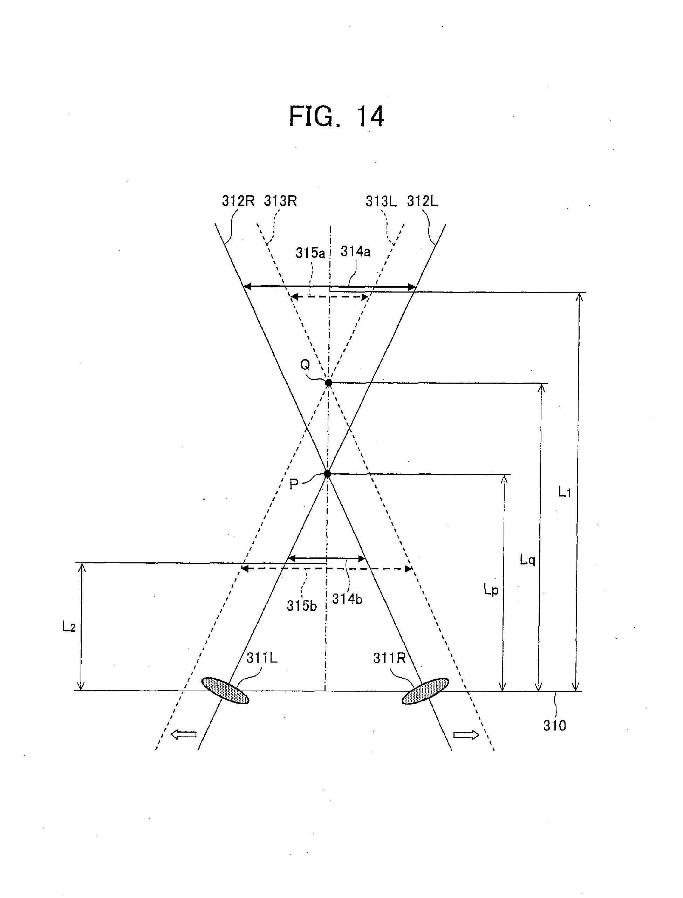

However, if relative positions of left and right images are changed to reduce a disparity value of an object displayed on the rear side of a display in the technique described in Patent Document 1, a disparity value of an object appearing closer than the convergent point (displayed protruding from the display) is sharply increased. Conversely, if relative positions of left and right images are changed to reduce a disparity value on the front side, a disparity value of an object appearing further than the convergent point (displayed retracting behind the display) is problematically sharply increased. This change in disparity value will briefly be described with reference to Fig. 14.

Fig. 14 is a diagram schematically depicting a change in disparity value in the case of changing relative positions of images acquired by two imaging apparatuses arranged in a convergent manner. In Fig. 14, respective optical centers of two imaging apparatuses 311L and 311R are denoted by 312L and 312R and a position P located at a distance LP is defined as a convergent point. In this case, disparity values at points located at distances L1 and L2 are denoted by 314a and 314b, respectively. If the relative positions are changed to reduce a disparity value of a background, the optical centers of the left and right imaging apparatuses 311L and 311R are changed to optical centers 313L and 313R, respectively.

In this case, the disparity values 314a and 314b are changed to disparity values 315a and 315b and it is understood that a disparity value is reduced behind the convergent point P and is greatly expanded before the convergent point P. Although the position of the convergent point P appears on a display plane in stereoscopic view, the display plane is changed to the position of a point Q (at distance Lq) by changing the relative positions of the left and right images. Therefore, it is recognized that the position of the convergent point is changed in stereoscopic view and a position of an object displayed on the display plane is also changed, causing stereoscopic display having a different rate between protrusion and retraction in a display image (greatly changing the position of zero parallax). Furthermore, a disparity value must be calculated for each area of the left and right images, resulting in an extremely large processing amount.

The present invention was conceived in view of the situations and it is therefore an object of the present invention to provide a stereoscopic image converting apparatus capable of display with a disparity value in the retraction direction equal to or less than predetermined parallax regardless of a screen size when images for stereoscopic view are displayed, and a stereoscopic image displaying apparatus including the apparatus.

MEANS FOR SOLVING THE PROBLEM

To solve the above problems, a first technical means of the present invention is a stereoscopic image converting apparatus inputting two or more images having different viewpoints to output the two or more input images with a convergent angle changed, comprising: a photographing condition extracting portion for extracting convergent angle conversion information that is a photographing condition at the time of photographing of the two or more images; and an image converting portion for changing a convergent angle at the time of photographing of the two or more images, wherein the image converting portion includes a convergent angle correction value calculating portion that calculates a maximum disparity value of the two or more images based on convergent angle conversion information extracted by the photographing condition extracting portion and display size information of a display screen for displaying the two or more images and calculates a convergent angle correction value making the calculated maximum disparity value equal to or less than a preliminarily specified maximum disparity value, and a convergent angle conversion processing portion that generates images having a convergent angle changed from that at the time of photographing of the two or more images based on the calculated convergent angle correction value.

A second technical means is the stereoscopic image converting apparatus of the first technical means, wherein the image converting portion includes a relative position conversion processing portion for converting relative positions of images generated by the convergent angle conversion processing portion such that a position of a convergent point before the change in convergent angle coincides with a position of a convergent point after the change in convergent angle.

A third technical means is the stereoscopic image converting apparatus of the first or the second technical means, wherein the convergent angle conversion processing portion changes a convergent angle such that the maximum disparity value of the two or more images is reduced.

A fourth technical means is the stereoscopic image converting apparatus of any one of the first to the third technical means, wherein the preliminarily specified maximum disparity value is a viewer's pupil distance.

A fifth technical means is the stereoscopic image converting apparatus of the fourth technical means, wherein the viewer's pupil distance is 5 cm.

A sixth technical means is the stereoscopic image converting apparatus of the first or the second technical means, wherein the convergent angle conversion processing portion changes a convergent angle such that the maximum disparity value of the two or more images is expanded.

A seventh technical means is the stereoscopic image converting apparatus of any one of the first to the sixth technical means, wherein the photographing condition extracting portion further extracts base-line length information and field angle information at the time of photographing of the two or more images as the photographing condition, wherein the convergent angle correction value calculating portion calculates the maximum disparity value of the two or more images based on the display size information, the convergent angle conversion information, the base-line length information, and the field angle information to calculate a convergent angle correction value making the calculated maximum disparity value equal to or less than a preliminarily specified maximum disparity value.

An eighth technical means is the stereoscopic image converting apparatus of any one of the first to the seventh technical means, wherein the photographing condition extracting portion extracts the photographing condition from metadata of the two or more images.

A ninth technical means is the stereoscopic image converting apparatus of any one of the first to the seventh technical means, wherein the photographing condition extracting portion extracts the photographing condition based on device information identifying imaging apparatuses which photographed the two or more images by referring to a table that correlates the device information with the photographing condition.

A tenth technical means is a stereoscopic image displaying apparatus comprising: the stereoscopic image converting apparatus of any one of the first to the ninth technical means.

EFFECT OF THE INVENTION

According to the present invention, since a disparity value in the retraction direction can be adjusted to a predetermined disparity value or less for display while reducing displacement of a convergent point and expansion of parallax of protrusion regardless of a screen size of display, a strain such as eyestrain is not imposed on a viewer.
Since a disparity value in the retraction direction can be adjusted to a predetermined disparity value or less without changing the position of the convergent point, an object position of zero parallax displayed on a display plane is not changed.

BRIEF DESCRIPTION OF DRAWINGS

[Fig. 1] Fig. 1 is a diagram of a general configuration example of a stereoscopic image converting apparatus according to the present invention.

[Fig. 2] Fig. 2 is a schematic of an optical system viewed from above when images are photographed by imaging apparatuses arranged in a convergent manner.

[Fig. 3] Fig. 3 is a diagram for explaining parallax of two imaging apparatuses in convergent arrangement.

[Fig. 4] Fig. 4 is a diagram of a disparity value on a display screen.

[Fig. 5] Fig. 5 is a diagram of an example of correlation between a rate of a disparity value to a screen width and a visual distance.

[Fig. 6] Fig. 6 is a block diagram of a configuration example of an image converting portion according to a first embodiment of the present invention.

[Fig. 7] Fig. 7 is a flowchart for explaining an example of a process of a convergent angle correction value calculating portion.

[Fig. 8] Fig. 8 is a diagram for explaining outlines of a convergent angle conversion process in the first embodiment of the present invention.

[Fig. 9] Fig. 9 is a conceptual diagram for comparing and explaining a disparity value from convergent angle conversion and a disparity value in the case of changing relative positions of left and right images.

[Fig. 10] Fig. 10 is a block diagram of a configuration example of an image converting portion according to a second embodiment of the present invention.

[Fig. 11] Fig. 11 is a diagram for explaining outlines of a convergent angle conversion process and an image relative position conversion process in the second embodiment of the present invention.

[Fig. 12] Fig. 12 is a diagram for explaining outlines of the convergent angle conversion process when only one imaging apparatus has a convergent angle.

[Fig. 13] Fig. 13 is a diagram for explaining a problem of parallax due to a difference in screen size.

[Fig. 14] Fig. 14 is a diagram schematically depicting a change in disparity value in the case of changing relative positions of images acquired by two imaging apparatuses arranged in a convergent manner.

PREFERRED EMBODIMENT OF THE INVENTION

A stereoscopic image converting apparatus and a stereoscopic image displaying apparatus including the apparatus according to the present invention will now be described in terms of embodiments with reference to the drawings.

<First Embodiment>

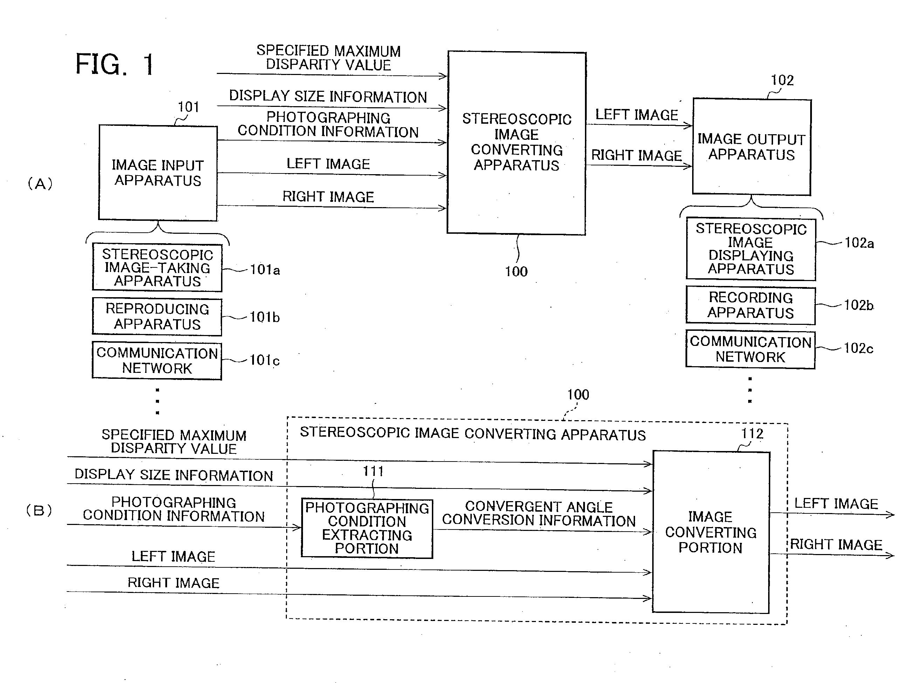

Fig. 1 is a diagram of a general configuration example of a stereoscopic image converting apparatus according to the present invention. Fig. 1(A) is a diagram of a configuration example of a stereoscopic image converting system including the stereoscopic image converting apparatus and, in Fig. 1(A), reference numerals 100, 101, and 102 denote a stereoscopic image converting apparatus, an image input apparatus, and an image output apparatus, respectively. Fig. 1(B) is a block diagram of a configuration example of the stereoscopic image converting apparatus 100. The stereoscopic image converting apparatus 100 includes a photographing condition extracting portion 111 and an image converting portion 112, changes a convergent angle at the time of photographing of left and right images (e.g., through projective transformation) as an example of two or more images from different viewpoints acquired from the image input apparatus 101, and outputs the left and right images with a changed convergent angle to the image output apparatus 102.

Left and right images input to the image input apparatus 101 or the stereoscopic image converting apparatus 100 include images having different viewpoints mixed within one image (one frame) as in the case of, for example, a side-by-side method, as long as two or more images from different viewpoints are input to the image input apparatus 101 or the stereoscopic image converting apparatus 100, and any method (format) may be used for transferring the two or more images from different viewpoints.

The image input apparatus 101 is, for example, a stereoscopic image-taking apparatus 101a, a reproducing apparatus 101b, or a communication network 101c and inputs left-eye and right-eye images having binocular parallax to the stereoscopic image converting apparatus 100. In the stereoscopic image converting apparatus 100, the image converting portion 112 performs, for example, projective transformation of left and right images for the left and right images input from the image input apparatus 101 based on a specified maximum disparity value, display size information of a display screen, and photographing condition information so as to generate left and right images displayed within a maximum disparity value specified in advance regardless of a display screen size. The left and right images generated by the image converting portion 112 are delivered to the image output apparatus 102. The image output apparatus 102 is an apparatus outputting the left and right images from the stereoscopic image converting apparatus 100 depending on a purpose, such as a stereoscopic image displaying apparatus 102a displaying the left and right images as stereoscopic images, a recording apparatus 102b storing the left and right images, and a communication network 102c transmitting the left and right images. The stereoscopic image displaying apparatus 102a may be configured to integrally include the stereoscopic image converting apparatus 100.

A representative example will hereinafter be described in which input images to the stereoscopic image converting apparatus 100 are stereoscopic view images having binocular parallax photographed by imaging apparatuses arranged in a convergent manner.

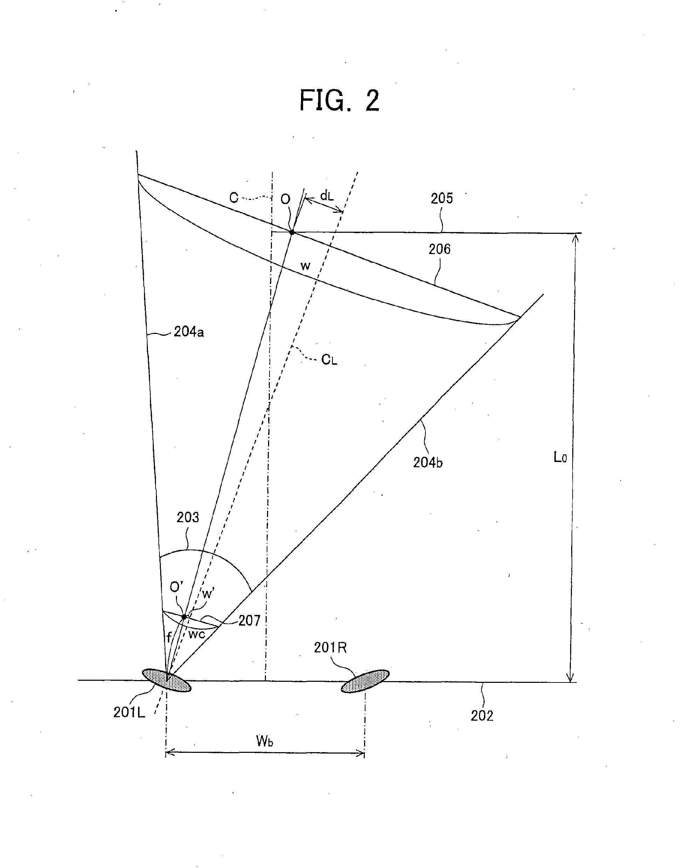

Fig. 2 is a schematic of an optical system viewed from above when images are photographed by imaging apparatuses arranged in a convergent manner. Fig. 2 is two-dimensionally drawn for simplicity and only one imaging apparatus is depicted out of two imaging apparatuses. Two imaging apparatuses 201L and 201R are arranged on a reference plane 202 with an interval of a distance wb such that the imaging apparatus 201L and the imaging apparatus 201R are located on the left side and the right side, respectively.

The imaging apparatuses 201L and 201R have convergence such that each device is tilted inward, and the optical center of the left imaging apparatus 201L in this case is defined as a center axis CL. The left imaging apparatus 201L photographs an image at a photographing field angle 203 and the both ends of the photographing range are a left end 204a and a right end 204b. In an image photographed by the imaging apparatus 201L, objects disposed within the field angle 203 (a region between the left end 204a and the right end 204b) are photographed. When it is assumed that an object O exists on a plane 205 at a distance Lo from the reference plane 202, that 206 denotes a plane passing through the object O, perpendicular to the center axis CL, and within a range between the field angle ends 204a and 204b, and that 207 denotes a virtual sensor plane perpendicular to the center axis CL and present on a plane at a focal distance f from the original point of the imaging apparatus 201L (an intersection point between the reference plane 202 and the center axis CL), an image of the object O is formed at an imaging point O' on the sensor plane 207.

In this case, a rate of a distance w' between the center axis CL and the imaging point O' on the sensor plane 207 relative to a width wc of the sensor plane 207 is equivalent to a rate of a distance dL between the center axis CL and the object O on the plane 206 relative to a width w of the plane 206. When this rate is defined as a rate of parallax DL to an image width at a distance Lo, the rate of parallax DL is expressed as follows.

$$\mathrm{DL=w'/wc=dL/w \quad ...Eq. \ (1)}$$

As a result, if an image photographed by the imaging apparatus 201L is directly displayed, the object O is displayed at a position shifted from the center by (WxDL) relative to a display screen width W.

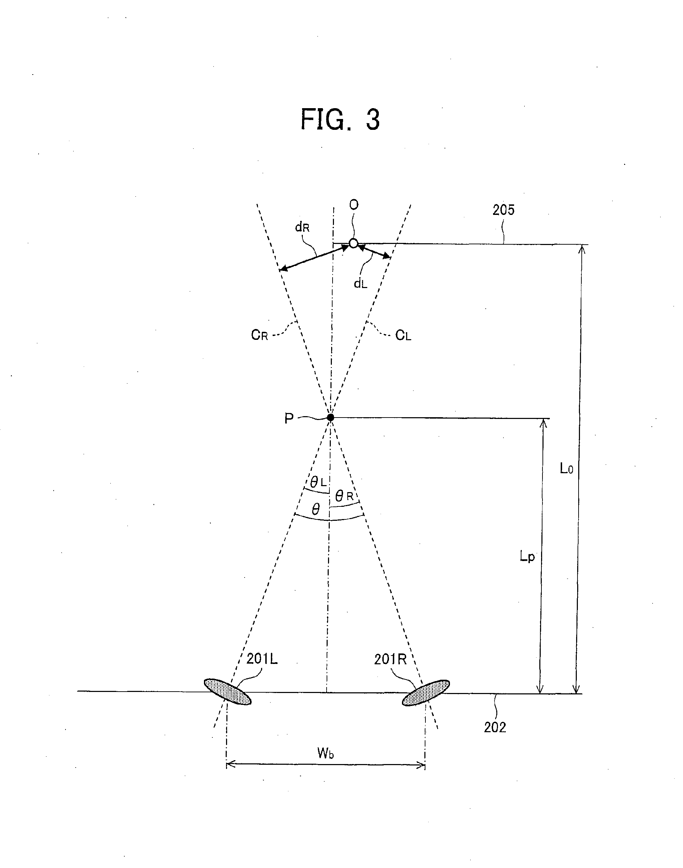

It is assumed that the same applies to the right imaging apparatus. Fig. 3 depicts a state in which the left and right imaging apparatuses are arranged facing inward in a convergent manner. The same reference numerals as Fig. 2 denote the same elements. In Fig. 3, the two imaging apparatuses 201L and 201R are arranged with an interval of a distance Wb and the imaging apparatuses have respective center axes, which are the center axis CL of the imaging apparatus 201L and a center axis CR of the imaging apparatus 201R. It is assumed that an intersection point of the two center axes CL and CR is a convergent point P, that a distance from the reference plane 202 to the convergent point P is a convergent point distance Lp, and that an angle formed by the optical axes CL and CR is a convergent angle θ. If the object O exists at a distance Lo from the reference plane 202, rates of parallax DL and DR, to an image width of the object O in the photographed images of the two imaging apparatuses are expressed by using distances dL and dR on the planes passing through the object O and perpendicular to the respective optical axes as is the case with the description of Fig. 2 as follows.

$$\mathrm{DL=dL/wL \quad ...Eq. \ (2)}$$

$$\mathrm{DR=dR/wR \quad ...Eq. \ (3)}$$

In this case, wL and wR correspond to w of Fig. 2 described above and correspond to a width passing through the point O of each camera, perpendicular to the optical axis, and within the photographing field angle.

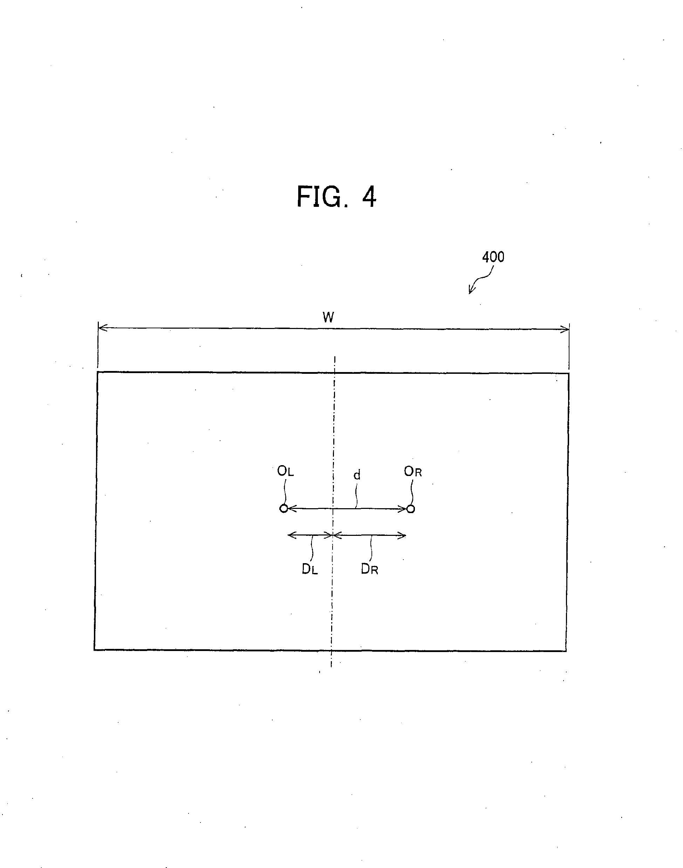

If the images photographed by the two imaging apparatuses are displayed as images for stereoscopic view, the object O is displayed at different positions in the left and right images, i.e., at OL in the image of the imaging apparatus 201L and at OR in the image of the imaging apparatus 201R as exemplarily illustrated by a display screen 400 depicted in Fig. 4. A disparity value on this display is defined as a disparity value d. The disparity value d is determined depending on the sum of parallax corresponding to the rates of parallax DL, DR and, for example, if a screen width of the display screen 400 is W, the disparity value d is expressed as follows.

$$d=(DL+DR)\times W \qquad ...Eq. \quad (4)$$

Therefore, it is understood that the object O present at the distance Lo is displayed as the disparity value d when displayed with the screen width W. However, this is the description in the case of directly displaying the images acquired from the imaging apparatuses. If segmentation of the left and right images is performed, a correction must be made depending on segmentation position and size. In this case, the disparity value d is corrected by using positions of the optical center and the segmentation center and a rate of the segmentation size as coefficients. Although the reference plane 202 is not parallel with the plane perpendicular to the optical axis of each of the imaging apparatuses because of the convergence, if the planes are corrected onto the same plan for correcting distortion between the left and right images due to a convergent angle, input images may be images converted into planes parallel with the reference plane 202. In this case, the disparity value d may be corrected depending on a conversion parameter. Strictly speaking, since a sensor of the imaging apparatus 201 has pixels, the imaging point O' of a pixel object is formed on a certain pixel on the sensor plane 207. Thus, displacement occurs on the basis of a pixel due to pixel pitch and size; however, the displacement is minute and, therefore, the concept of pixel is excluded in this description.

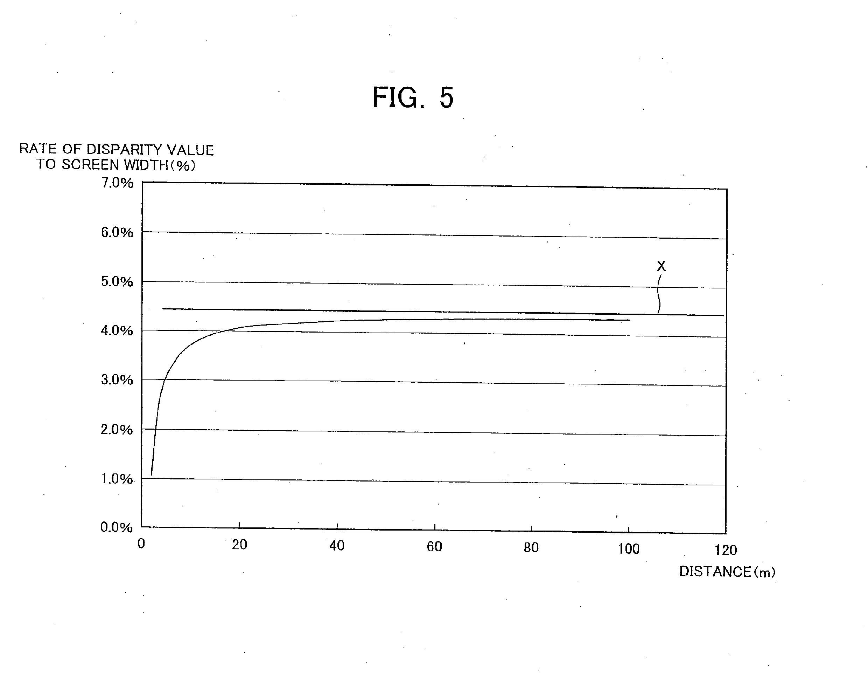

The maximum parallax of distant view due to a convergent angle will be described. A normal image includes an object with a larger disparity value and an object with a smaller disparity value and, for example, when a disparity value of a certain object included in an input image is t % of a display screen width W, a disparity value displayed on a displaying apparatus is t % of the display screen width W, i.e., the disparity value is Wxt/100. Correlation between an object distance and parallax will be described by using an example. For example, in Fig. 3 described above, when the imaging apparatuses have an interval Wb of 65 mm, a field angle of 52 degrees, and a convergent angle θ of 2.5 degrees, a distance to the convergent point is about 1.5 m and an object located at a distance greater than 1.5 m has parallax in the retraction direction. Fig. 5 depicts how a rate of a disparity value of the object O to a screen width changes in such a photographing condition when a value of the distance Lo of the object O is changed to a more distant location from the convergent point. As depicted in Fig. 5, if the object O is located at infinity, a rate of a disparity value relative to the display screen width converges to a constant value of about 4.5 %. In this case, for example, when displayed on an image displaying apparatus having a display screen width of 132.9 cm, the maximum disparity value is 132.9×4.5/100≈6.0 cm, which is the parallax greater than the child's average pupil distance of 5 cm.

A rate of parallax of a distant object acquired from two imaging apparatuses generally converges at infinity and this convergent value is also changed depending on a convergent angle and a base-line length between the imaging apparatuses and a field angle of the imaging apparatuses. For example, if the two imaging apparatuses have the same value θv of the field angle and an angle formed by the optical axes of the two imaging apparatuses is equally divided on a plane perpendicular to the plane 202, when it is assumed that O is located at infinity, a rate of parallax DL+DR, in the object O can approximately be expressed by using the field angle θv of the imaging apparatuses and the convergent angle θ of the two imaging apparatuses as follows.

$$DL+DR\approx\alpha\times(Tan(\theta/2)/Tan(\theta v/2)) \qquad ...Eq. \quad (5)$$

In this equation, α is a coefficient independent of a field angle and a convergent angle determined by camera arrangement and camera parameters. Therefore, a convergent value is the maximum rate of parallax and can be expressed by the convergent angle θ and the field angle θv of the imaging apparatuses. However, in this case, the base-line length is assumed to be a sufficiently small value relative to infinity Lo. If θ is zero, i.e., if two imaging apparatuses are arranged in parallel with each other, the rate of parallax at infinity converges to zero.

When such a convergent value is defined as a rate of maximum parallax X of a distant object, if images photographed in a convergent configuration are displayed on a display with a screen width W, parallax of up to W×X/100 may be generated as parallax in the retraction direction. As described above, stereoscopic view must be displayed with parallax in the retraction direction suppressed to a prescribed value or less such as a viewer's pupil distance or less. Since the rate of maximum parallax X can be calculated from photographing condition information and it can be said that parallax greater than the acquired rate of maximum parallax is not generated in its object images, the maximum disparity value to be displayed can be prescribed by using the rate of maximum parallax X of left and right images as a standard. Since a rate of parallax to distance generally sharply increases as depicted in Fig. 5, if a user photographs images with imaging apparatuses arranged in a convergent manner, since distant objects are often included in a background and the parallax of the background at the time of stereoscopic view of the images is likely to be parallax close to the rate of maximum parallax X, it is not so problematic to consider the maximum parallax of the left and right images as W×X/100. Therefore, in the present invention, a disparity value of an entire screen is controlled by using the rate of maximum parallax X amount of left and right images as a standard.

The photographing condition extracting portion 111 extracts a photographing condition for calculating a rate of maximum parallax of left and right images as described above. Specifically, the photographing condition extracting portion 111 acquires parameters indicative of positional relationship of the imaging apparatuses and camera parameters of the imaging apparatuses for input left and right images and delivers convergent angle conversion information which is information necessary to conversion to the image converting portion 112. The photographing condition extracting portion 111 extracts the convergent angle information that is an angle between optical axes of the two imaging apparatuses photographing the left and right images and the base-line length information indicative of an interval between the two imaging apparatuses (i.e., interval between the optical centers of the two imaging apparatuses) as the parameters indicative of positional relationship of the imaging apparatuses. The convergent angle may be calculated from information of a distance to the convergent point and the base-line length. The photographing condition extracting portion 111 extracts the field angle information indicative of photographing ranges of the imaging apparatuses and the imaging resolution as the camera parameters of the imaging apparatuses. The field angle information may be calculated by using a focal distance of the imaging apparatuses and information of a sensor size.

It is conceivable that one method of extracting such parameters indicative of positional relationship between imaging apparatuses and parameters indicative of a photographing condition of individual cameras is to extract the parameters from metadata of image files recording left and right images. For example, in the case of still images, one file format storing left and right images is "CIPA DC-007 Multi-Picture Format (MPF)" standardized by the general incorporated association of Camera & Imaging Products Association (CIPA) and such a file has metadata with an area in which the base-line length information and the convergent angle information are input. The necessary parameters can be extracted from metadata of such a file. Optical information of imaging apparatuses such as a photographing field angle can also be extracted from Exif data of each image. For example, a field angle may be obtained from focal distant information at the time of photographing, image size, pixel density information, etc., of Exif data of photographed images. If segmentation is performed on the basis of a field angle at the time of 3D display, the photographing field angle must be corrected depending on a segmentation size.

If the necessary information cannot be acquired from metadata, the necessary parameters such as convergent angle information may be acquired based on device information identifying the imaging apparatuses photographing the left and right images by reference to a table correlating the device information with parameters indicative of positional relationship and parameters indicative of photographing conditions of individual cameras. For example, the photographing condition extracting portion 111 may retain a parameter reference table correlating the device information of the imaging apparatuses (such as device names specific to devices) with the parameters. The photographing condition extracting portion 111 acquires the device names of the imaging apparatuses photographing the left and right images and extracts parameters corresponding to the device names from the parameter reference table. The device names can be acquired from Exif of image files or EDID (Extended Display Identification Data) in the case of connection through HDMI (High Definition multimedia Interface). The device names and parameters can be updated by utilizing a network, broadcast waves, etc. Although the parameter reference table is retained in the photographing condition extracting portion 111 in this description, this table may be located outside and a method may be used in which a reference is made through a network. The photographing condition extracting portion 111 outputs the parameters for conversion acquired in this way to the image converting portion 112.

Display size information will be described. The display size information in this case indicates a screen size of a display screen displaying the left and right images output from the image converting portion 112 and is information related to an actually displayed screen width. In the case of connection to the stereoscopic image displaying apparatus 102a, the display screen size is acquired from the stereoscopic image displaying apparatus 102a and, in the case of storage into the recording apparatus 102b or output to the communication network 102c, an assumed display screen size is used. A method may be used in which the assumed display screen size is specified by a user, for example. The display size information acquired from the stereoscopic image displaying apparatus 102a or specified by a user in this way is input to the image converting portion 112 of the stereoscopic image converting apparatus 100.

A specified maximum disparity value will be described. The specified maximum disparity value is a value of the actually displayed maximum disparity value in the retraction direction in the case of stereoscopic display and is a disparity value (actual size) visually recognized when a viewer views the display screen. For example, since a disparity value in the retraction direction equal to or greater than a pupil distance tends to cause eyestrain, the maximum disparity value is set equal to or less than a pupil distance of a viewer. A pupil distance of a viewer is considered to be 65 mm in the case of adults and 50 mm in the case of children. Therefore, the specified maximum disparity value is desirably set equal to or less than the child's average pupil distance, i.e., 50 mm in consideration of child's viewing. As a result, if the specified maximum disparity value is specified to, for example, 50 mm, when output images are stereoscopically displayed in a size corresponding to the display size information, the parallax in the retraction direction is displayed to be 50 mm or less. Although the specified maximum disparity value is specified to 50 mm, a user may specify the amount as needed and images can be displayed with a disparity value in consideration of user's preferences and individual differences. The specified maximum disparity value specified in this way is input to the image converting portion 112 of the stereoscopic image converting apparatus 100.

[Image Converting Portion]

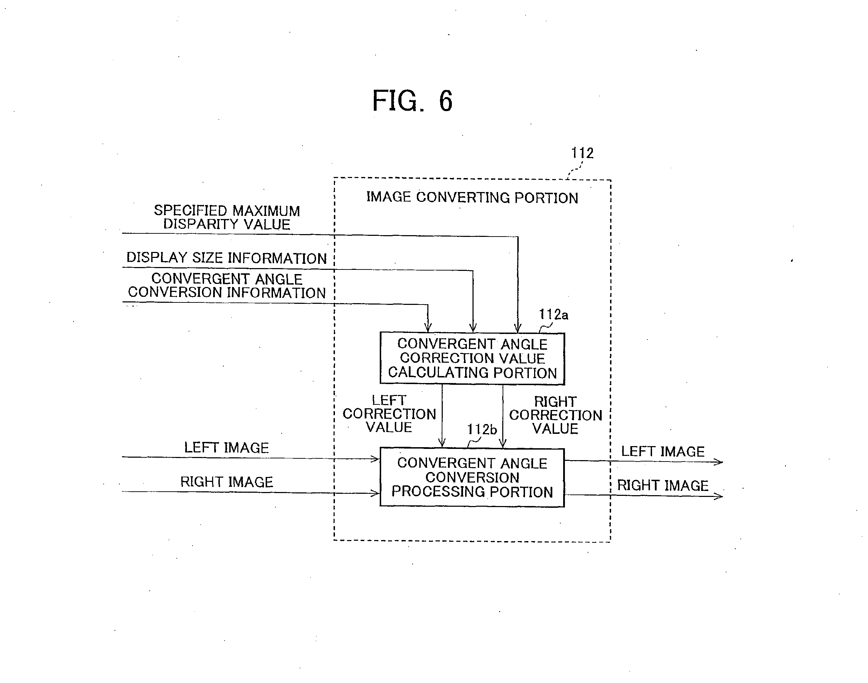

Fig. 6 is a block diagram of a configuration example of the image converting portion 112 according to a first embodiment of the present invention. The image converting portion 112 is made up of a convergent angle correction value calculating portion 112a calculating the maximum disparity value of the left and right images based on the convergent angle conversion information extracted by the photographing condition extracting portion 111 and the display size information of the display screen displaying the left and right images to calculate a convergent angle correction value making the calculated maximum disparity value equal to or less than the specified maximum disparity value specified in advance, and a convergent angle conversion processing portion 112b that generates images having a convergent angle changed from that at the time of photographing of the left and left images based on the convergent angle correction value calculated by the convergent angle correction value calculating portion 112a.

Therefore, the image converting portion 112 calculates the maximum disparity value in the retraction direction toward the rear side from the display screen of the displaying apparatus by using the convergent angle conversion information of the left and right images input from the photographing condition extracting portion 111 and the display size information of the display screen displaying the left and right images, and determines whether the calculated maximum disparity value exceeds the specified maximum disparity value. If exceeding, the image converting portion 112 generates and outputs images with the convergent angle of the left and right images adjusted such that the maximum disparity value in the retraction direction toward the rear side from the display screen of the displaying apparatus is set to a disparity value equal to or less than the specified maximum disparity value. If the calculated maximum disparity value does not exceed the specified maximum disparity value, the left and right images are directly output.

[Convergent Angle Correction Value Calculating Portion]

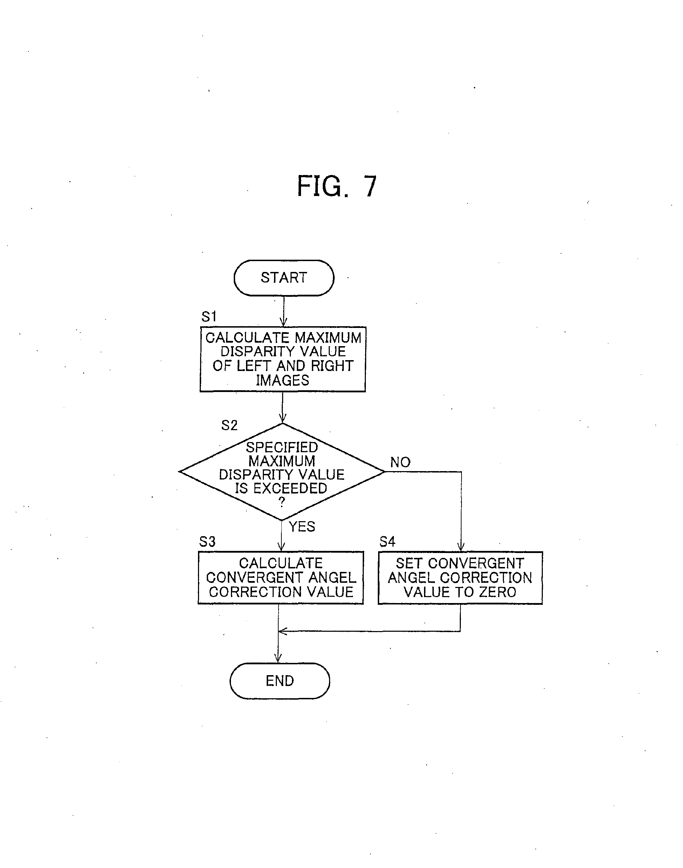

An example of the process of the convergent angle correction value calculating portion 112a will be described with reference to a flowchart of Fig. 7. The convergent angle correction value calculating portion 112a inputs the convergent angle conversion information of the left and right images and the display size information of the displaying apparatus displaying the left and right input images to calculate the maximum disparity value in the retraction direction toward the rear side from the display screen of the displaying apparatus (step S1). It is determined whether the calculated maximum parallax value exceeds the specified maximum disparity value indicated by the maximum disparity value information (step S2). If exceeding the specified maximum disparity value (In the case of YES), a convergent angel correction value is calculated for adjusting the convergent angle such that the maximum parallax value of the left and right input images in the retraction direction toward the rear side from the display screen of the displaying apparatus is set equal to or less than the specified maximum disparity value, for each of the left and right input images (step S3). If not exceeding the specified maximum disparity value at step S2 (in the case of NO), the both convergent angel correction values of the left and right input images are set to zero (step S4). The calculated respective convergent angel correction values of the left and right input images are output to the convergent angle conversion processing portion 112b.

For the calculation of the maximum disparity value corresponding to the input images at step S1, as described above, the rate of maximum parallax X of the input images is calculated by using the convergent angle conversion information such as the convergent angle information and the photographing field angle information delivered from the photographing condition extracting portion 111. In this case, since a width W of the display screen is acquired from the display size information, if the input images are displayed in the display size, a maximum disparity value d is $d = W \times X / 100$. The comparison with an input specified maximum disparity value d' is made at step S2 and, if d>d' is satisfied, the correction values are calculated to make the maximum disparity value equal to or less than the specified maximum disparity value at step S3. To set the disparity value to d', the convergent angle must be converted such that a rate of corrected parallax X' satisfies $X' = d'/W \times 100$ (%). If the photographing field angle is fixed, a rate of maximum parallax can be prescribed by a convergent angle and, therefore, when $\theta$ denotes a convergent angle in the case when the rate of maximum parallax is X and $\theta'$ denotes a convergent angle in the case when the maximum parallax is the rate X', respectively, a convergent angle correction value of each of the left and right input images corresponding to a convergent angle change amount $\Delta\theta = \theta' - \theta$ is output to the image converting portion 112.

In this example, assuming that the specified maximum disparity value is 5 cm, for example, and that the display screen width acquired from the display size information is 101.8 cm, the conversion is required if a disparity value calculated from the rate of maximum parallax of input images and the display image width of 101.8 cm exceeds 5 cm. The rate of maximum parallax X' after the conversion is obtained from $X' = 50/1018 \times 100$ and X'=4.9 % is obtained in this case. The convergent angle θ' in this case is calculated From Eq. (5) described above to obtain each of the convergent angle correction values of the left and right images corresponding to a difference Δθ from the convergent angle θ acquired from the photographing condition extracting portion 111. For example, if the left and right imaging apparatuses are arranged with the same amount of the convergent angle, the convergent angle correction value of the left and right images is Δθ/2.

[Convergent Angle Conversion Processing Portion]

The convergent angle conversion processing portion 112b will be described. The convergent angle conversion processing portion 112b performs image conversion of the left and right input images based on the respective convergent angle correction values of the left and right input images calculated by the convergent angle correction value calculating portion 112a so as to output the left and right images with the convergent angle converted such that the maximum disparity value is set equal to or less than the specified maximum disparity value.

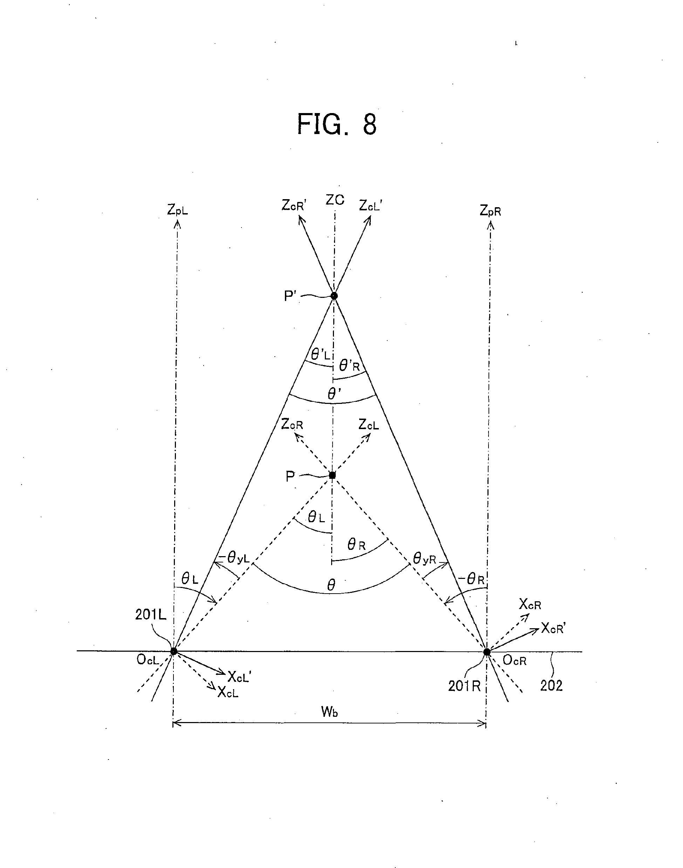

The image conversion process through convergent angle conversion will hereinafter be described with reference to Fig. 8. The convergent angle conversion will first be described in terms of a basic model by taking the conversion from parallel arrangement without convergence into arrangement with convergence as an example. If the left imaging apparatus 201L and the right imaging apparatus 201R photograph stereoscopic images with the parallel method, the imaging apparatuses are disposed such that the optical axes thereof are perpendicular to a base line Wb. In the case of the parallel method, when the optical axes of the left and right imaging apparatuses are $Z_{pL}$ and $Z_{pR}$, the optical axes are parallel with each other. If the left and right imaging apparatuses photograph stereoscopic images with the crossover method, a point of intersection between the optical axes of the left and right imaging apparatuses (hereinafter, a cross point) is generated. ZC denotes an axis passing through this cross point and parallel to the optical axes $Z_{pL}$ and $Z_{pR}$ of the left and right imaging apparatuses in the case of the parallel method.

To give a convergent angle to the left imaging apparatus 201L such that the cross point is located at the position of a point P on the axis ZC depicted in Fig. 8, the optical axis $Z_{pL}$ is rotated by $\theta_L$ around an optical center $O_{cL}$ to the right on the plane of Fig. 8. Similarly, to give a convergent angle to the right imaging apparatus 201R, the optical axis $Z_{pR}$ is rotated by $\theta_R$ around an optical center $O_{cR}$ to the left on the plane of Fig. 8. A three-dimensional coordination system of the left imaging apparatus 201L after the rotation can be represented by defining the optical axis (Z-axis) as $Z_{cL}$, the X-axis as $X_{cL}$, and the Y-axis on the rear side of the plane of Fig. 8. Similarly, a three-dimensional coordination system of the right imaging apparatus 201R after the rotation can be represented by defining the optical axis (Z-axis) as $Z_{cR}$, the X-axis as $X_{cR}$, and the Y-axis on the rear side of the plane of Fig. 8. Using a convergent angle component $\theta_L$ of the left imaging apparatus 201L and a convergent angle component $\theta_R$ of the right imaging apparatus 201R, the convergent angle θ of the cross point P can be expressed by the sum of $\theta_L$ and $\theta_R$ as follows.

$$\theta = \theta_L + \theta_R \quad \text{...Eq. (6)}$$

A convergent angle conversion method in this embodiment will be described. For each of the three-dimensional coordination systems of the left imaging apparatus 201L and the right imaging apparatus 201R, a convergent angle can be converted by rotation around each of the Y-axes. For the left imaging apparatus 201L, the optical axis $Z_{cL}$ is rotated by $-\theta_{yL}$ around the optical center $O_{cL}$ to the left on the plane of Fig. 8. Similarly, for the right imaging apparatus 201R, the optical axis $Z_{cR}$ is rotated by $\theta_{yR}$ around the optical center $O_{cR}$ to the right on the plane of Fig. 8.

The three-dimensional coordination system of the left imaging apparatus 201L after the rotation (after the convergent angle conversion) has the optical axis (Z-axis) as $Z_{cL}'$, the X-axis as $X_{cL}'$, and the Y-axis on the rear side of the plane of Fig. 8. Similarly, the three-dimensional coordination system of the right imaging apparatus 201R has the optical axis (Z-axis) as $Z_{cR}'$, the X-axis as $X_{cR}'$, and the Y-axis on the rear side of the plane of Fig. 8. The conversion of the convergent angle moves the cross point P before conversion to P'. A convergent angle component $\theta_L'$ of the left imaging apparatus 201L and a convergent angle component $\theta_R'$ of the right imaging apparatus 201R of the cross point P' can be expressed as follows.

$$\theta_L' = \theta_L - \theta_{yL} \quad \text{...Eq. (7)}$$

$$\theta_R' = \theta_R - \theta_{yR} \quad \text{...Eq. (8)}$$

$\theta_{yL}$ and $\theta_{yR}$ correspond to the convergent angle correction values.

The convergent angle θ' of the cross point P' can be expressed by the sum of $\theta_L$' and $\theta_R$'.

$$\theta' = \theta_L' + \theta_R' \quad \text{...Eq. (9)}$$

[Generation of Convergent Angle Conversion Image]

A method of converting an image photographed at the cross point of P and the convergent angle θ into an image at the cross point P' and the convergent angle θ' will be described. A point X' = $[X'_x\ X'_y\ X'_z]^T$ acquired by rotating a point X= $[X_x\ X_y\ X_z]^T$ on the three dimensions around the Y-axis of a three-dimensional coordinate system of an imaging apparatus can be expressed by a Y-axis rotation equation described as the following Eq. (10).

$$X' = RX \quad \text{...Eq. (10)}$$

$$R = \begin{matrix} \cos\theta_y & 0 & \sin\theta_y \\ 0 & 1 & 0 \\ -\sin\theta_y & 0 & \cos\theta_y \end{matrix}$$

R: rotation matrix representative of rotation of the Y-axis
$\theta_y$: rotation angle of the Y-axis (rotation direction is the clockwise direction)

Therefore, in this case, the conversion (rotation) to the point X' is achieved by multiplying the point X before rotation by the rotation matrix R. Assuming that the Y-axis is rotated clockwise by θy, the rotation matrix R can be expressed by a combination of the sine and cosine functions of θy,

Although the rotation of the point X on the three dimensions has been described, a method of rotating a point x = $[X_x\ X_y\ 1]^T$ on a photographed image will then be described. To convert (rotate) the point x on an image photographed at a convergent angle $\theta_L$ by the left imaging apparatus 201L to a point x'=$[X_{x'}\ X_y'\ 1]^T$ on an image of a convergent angle $\theta_L$', a convergent angle conversion equation described as the following Eq. (11) is used.

$$sX' = ARA^{-1}x \quad \text{...Eq. (11)}$$

[Eq. 2]

$$A = \begin{matrix} fx & 0 & cx \\ 0 & fy & cy \\ 0 & 0 & 1 \end{matrix}$$

A: parameter inside a camera
fx, fy: focal distances of the X- and Y-axis components
cx, cy: principal point coordinates
s: scale factor (inverse of the z-component of the right-hand side)

When fx denotes the focal distance of the X-axis component of the left imaging apparatus 201L; fy denotes the focal distance of the Y-axis component; and cx and cy denote a point (hereinafter, principal point coordinates) of intersection between a photographed image surface and the optical axis $Z_{cL}$, a parameter (hereinafter, an internal parameter) representative of optical characteristics of the left imaging apparatus 201L can be expressed by a three-by-three matrix A. A coordinate system for expressing the principal point coordinates is on a two-dimensional photographed image plane and has the origin at the left upper coordinates of the photographed image, the X-axis that is positive in the direction to the right of the photographed image, and the Y-axis that is positive in the direction to the bottom of the photographed image. A rotation matrix R for rotation to the convergent angle $\theta_L$' can be expressed by substituting a rotation angle $-\theta_{yL}$ for rotating the Y-axis to the center into $\theta_y$ of the rotation matrix R of Eq. (10) described above.

The conversion to the convergent angle $\theta_L$' is performed with the internal parameter A and the rotation matrix R. First, the point x on the photographed image of the convergent angle $\theta_L$ is multiplied by an inverse matrix of the internal parameter A for conversion to a normalized coordinate system in which the amplitude of the z-component is one. Second, after the multiplication by the rotation matrix R for rotation around the Y-axis by $-\theta_{yL}$, the multiplication by the internal parameter A causes the rotation (conversion) to the point on the image of the convergent angle $\theta_L$'. In this case, the z-component of the conversion result coordinates (calculation result of the right-hand side of Eq. (11)) has amplitude other than one. Therefore, third, scaling is performed by multiplying the conversion result coordinates by the inverse s of the z-component of the conversion result coordinates such that the z-component is set to one.

As a result of the conversion described above, the point x on the image of the convergent angle $\theta_L$ can be converted to the point x' on the image of the convergent angle $\theta_L$'. The image having the convergent angle of $\theta_L$' can be generated by performing this conversion for all the points on the image of the convergent angle $\theta_L$ of the left imaging apparatus 201L.

The following describes a method for converting (rotating) the point x on the image photographed at a convergent angle $\theta_R$ by the right imaging apparatus 201R to a point x'=$[X_x'\ X_y'\ 1]^T$ on an image of a convergent angle $\theta_R$'. The method is the same as the image generating method of the left imaging apparatus 201L except defining an internal parameter of the right imaging apparatus 201R as A and using a value obtained by substituting a rotation angle $\theta_{yR}$ for rotation around the Y-axis into $\theta_y$ of the rotation matrix R of Eq. (10) for rotation to the convergent angle $\theta_R$'.

[Comparison of Disparity values between Convergent Angle Conversion and Relative Position Conversion]

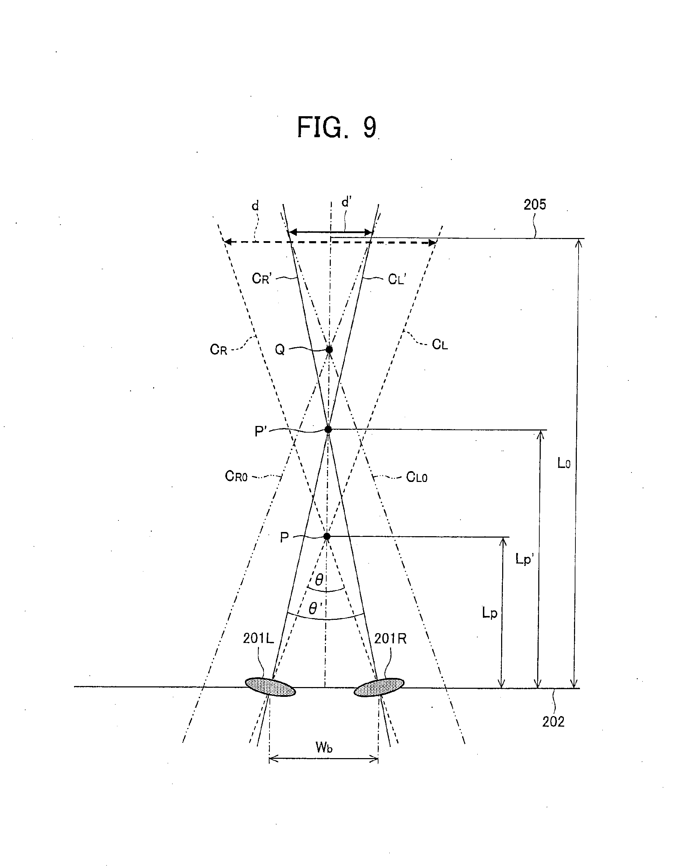

Fig. 9 is a conceptual diagram for comparing and explaining a disparity value from convergent angle conversion and a disparity value in the case of changing relative positions of left and right images. The relative positions of left and right images in the present invention mean that one image is horizontally shifted relative to the other image or that the both images are shifted relative to each other and, in the following description, the relative positions are defined in this way. The optical axes of the two imaging apparatuses 201L and 201R are $C_L$ and $C_R$, respectively, and arranged with a base-line length Wb and a convergent angle $\theta$. In this case, the convergent point is located at the position of P (at a distance Lp from the reference plane 202). A disparity value at a distance Lo from the reference plane 202 is a disparity value d and a reduced disparity value is a disparity value d'. Although a disparity value on display is actually prescribed by a display size and a rate of parallax, it is assumed that the display size and the photographing field angle are the same conditions so that the relative values of the disparity values d and d' are directly used as the relative values of parallax on display for simplicity of description.

$C_L$' and $C_R$' are central axes when the convergent angle $\theta$ is converted to $\theta$' such that parallax falls within the disparity value d' through the convergent angle conversion and, in this case, the convergent point is located at the position of P' (at a distance Lp' from the reference plane 202). If the relative positions of the left and right images are changed to change the disparity value d to the disparity value d' by the conventional technology, the respective optical axes are $C_{L0}$ and $C_{R0}$ and the convergent point is located at the position of Q. As can be seen from Fig. 9, if the convergent angle conversion of the present invention is performed, an expansion amount of parallax before the convergent point is reduced as compared to the conventional technology of changing relative positions when the both disparity values behind the convergent point, i.e., on the side closer to the background, are set within the same disparity value. A displacement amount from the convergent point P before the conversion (P to P') is reduced as compared to a displacement amount (P to Q) when the relative positions are changed. Strictly speaking, the convergent point is prescribed as a point of intersection between optical axes of two imaging apparatuses; however, a convergent point position in this case is an apparent position of the convergent point in stereoscopic view (position at which parallax is zero).

As described above, according to this embodiment, a disparity value in the retraction direction can be set equal to or less than a specified disparity value when displayed while reducing an increment in disparity value of an object before the convergent point. Since a disparity value can be set equal to or less than a specified disparity value when displayed regardless of a screen size of display, this is applicable to displaying apparatuses with any screen size and even an image having large parallax causing eye strain can be displayed by converting into an image having an acceptable disparity value.

Since parallax control can be provided without significantly displacing the convergent point, stereoscopic display reflecting photographer's intention can be performed without significantly changing positional relationship between protrusion and retraction in stereoscopic view.

Although parallax information may be calculated for each area from images acquired from two imaging apparatuses to perform image conversion by using the parallax information in a technique of adjusting a disparity value, this is considerably problematic since a processing amount of parallax calculation is enormous and it is difficult to acquire accurate parallax information in all the image areas. The present invention does not require such parallax calculation, enables the parallax control with a simple and low-load process, and enables a real-time conversion process.

<Second Embodiment>

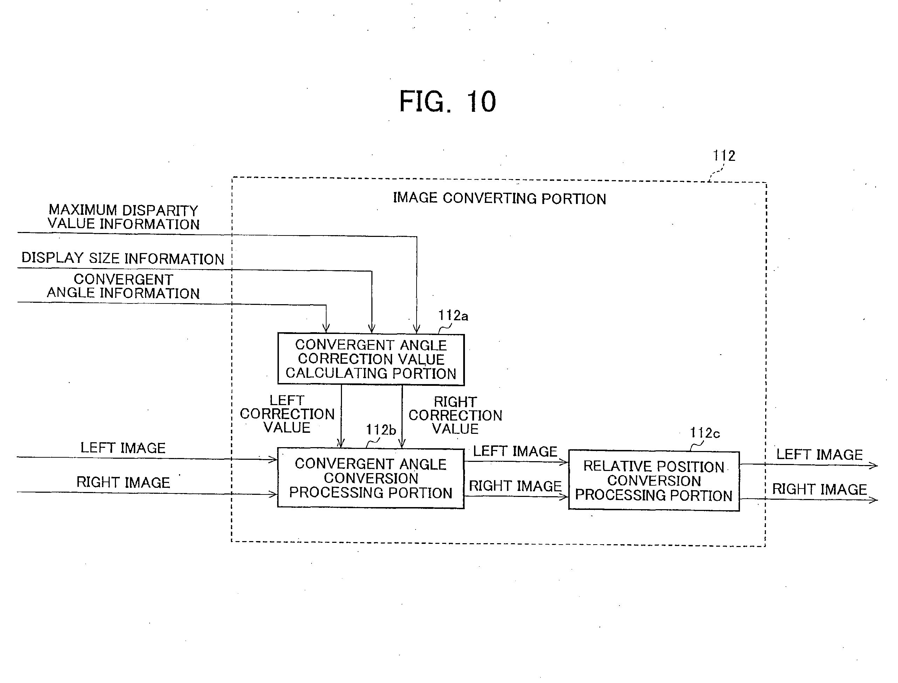

Fig. 10 is a block diagram of a configuration example of an image converting portion according to a second embodiment of the present invention. The image converting portion 112 of Fig. 10 has a configuration changed from the image converting portion 112 (Fig. 6) of the first embodiment and the constituent elements other than those of the image converting portion 112 of Fig. 6 are the same as the first embodiment and will not be described.

The image converting portion 112 of Fig. 10 includes a relative position conversion processing portion 112c in addition to the convergent angle correction value calculating portion 112a and the convergent angle conversion processing portion 112b depicted in Fig. 6. The convergent angle correction value calculating portion 112a and the convergent angle conversion processing portion 112b are the same as the process details of the process described in the first embodiment and will not be described there. The relative position conversion processing portion 112c converts relative positions of images subjected to projective transformation by the convergent angle conversion processing portion 112b such that a position of a convergent point before the projective transformation coincides with a position of a convergent point after the projective transformation.

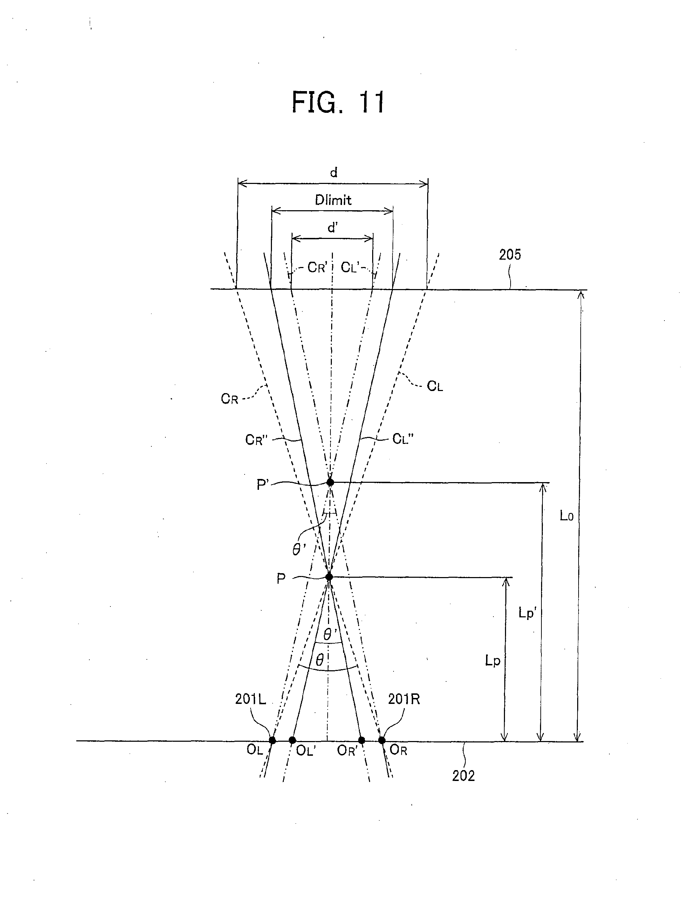

Fig. 11 is a diagram for explaining an example of disparity value control through a convergent angle conversion process and an image relative position conversion process. The convergent angle conversion process according to the first embodiment can make the maximum disparity value on the rear side from the displaying apparatus equal to or less than the specified maximum disparity value. However, the cross point is moved toward the far side on the three dimensions as compared to that before the convergent angle conversion (from the point P to the point P' of Fig. 11), thereby changing objects protruded toward the front side from the display screen of the displaying apparatus. For example, a position of an object on the three dimensions is located at the cross point P before the convergent angle conversion, a disparity value of the left and right images is zero before the convergent angle conversion (when the left and right optical axes are $C_L$ and $C_R$).

However, after the convergent angle conversion (when the left and right optical axes are $C_L$' and $C_R$'), parallax is generated. Since the point P is projected on the right side of $C_L$' in the left imaging apparatus 201L and on the left side of $C_R$' in the right imaging apparatus 201R, a disparity value is generated by a distance between these projection points. Therefore, although the point P before the convergent angle conversion was located on the display screen of the displaying apparatus, the point P is moved by the convergent angle conversion to the front side of the display screen in stereoscopic view. As a result, conversion to images different from the intention of an image producer is performed through the convergent angle conversion process of the first embodiment and this may not be appropriate for image conversion.

To make the maximum disparity value on the rear side of the display plane equal to or less than the specified maximum disparity value without changing an object to be positioned on the display screen of the displaying apparatus (the position of the cross point), for example, the left and right optical axes (CL and CR) can be rotated around the cross point P before convergent angle conversion. This will be described with reference to Fig. 11. The optical axes $C_L$ and $C_R$ before convergent angle conversion of Fig. 11 have the maximum disparity value d greater than a specified maximum disparity value Dlimit. To correct this disparity value, the cross point P can be used as a rotation center to rotate the optical axis $C_L$ counterclockwise on the plane of Fig. 11 and the optical axis $C_R$ clockwise on the plane of Fig. 11, thereby making the maximum disparity value on the rear side of the display screen of the displaying apparatus equal to or less than the specified maximum disparity value Dlimit without moving the cross point P.

This rotation moves the optical center $O_L$ of the left imaging apparatus 201L to $O_L$' and the optical center $O_R$ of the right imaging apparatus 201R to $O_R$' and rotates the optical axis $C_L$ of the left imaging apparatus 201L to $C_L$'' and the optical axis $C_R$ of the right imaging apparatus 201R to $C_R$''. The convergent angle after the rotation is $\theta$'.

As described above, By rotating left and right images around the cross point P, the left and right images can be converted to images having the maximum disparity value on the rear side of the display screen set equal to or less than the specified maximum disparity value without moving the cross point.

However, it is not easy to rotate each of the left and right photographed images around the cross point P. Therefore, the convergent angle conversion process according to the first embodiment is combined with a process of converting the relative positions of the converted left and right images to achieve a process of conversion into images having the maximum disparity value on the rear side of the display screen set equal to or less than the specified maximum disparity value without moving the cross point. This will be described with reference to Fig. 11.

In Fig. 11, the optical axes of the left and right imaging apparatuses 201L and 201R before convergent angle conversion are denoted by $C_L$ and $C_R$, respectively, and the convergent angle thereof is denoted by $\theta$. Since the maximum disparity value d on the rear side of the display screen of the displaying apparatus exceeds the specified maximum disparity value Dlimit in this state, the convergent angle conversion process executed in the first embodiment is executed. In the convergent angle conversion process, the left and right optical axes $C_L$ and $C_R$ are rotated around the respective optical centers $O_L$ and $O_R$ so as to form the convergent angle same as the convergent angle θ' acquired by rotation around the cross point P.

After executing the convergent angle conversion process, the left and right optical axes is changed from $C_L$ to $C_L$' and $C_R$ to $C_R$' and the convergent angle in this case is θ'. Although this convergent angle conversion process makes the maximum disparity value d' on the rear side of the display screen smaller than the specified maximum disparity value Dlimit, the cross point P is moved to P'. To return the cross point P' to the position of P, the left and right images after the convergent angle conversion process are entirely shifted such that the left image and the right image are shifted to right and left, respectively, on the plane of Fig. 11. The left and right images are entirely shifted by a shift amount such that the parallax between left and right projection points is set to zero at the position of the cross point P on the three dimensions. As a result of the shift of the left and right images, the optical centers $O_L$ and $O_R$ are moved to $O_L$' and $O_R$', respectively, and the optical axes $C_L$' and $C_R$' are moved to $C_L$" and $C_R$", respectively. This can be considered as the image conversion process same as the case of rotation around the cross point P.

As a result, the cross point P' after the convergent angle conversion can be returned to the cross point P before the convergent angle conversion while the convergent angle θ' after the convergent angle conversion is maintained. The execution of the process of this embodiment enables stereoscopic image conversion without increasing an disparity value on the front side of the cross point and without causing movement of the cross point as compared to the case of executing only the convergent angle conversion process of the first embodiment.

Although the embodiments of the present invention have been described in detail with reference to the drawings, the specific configuration is not limited to these embodiments, and designs etc. , not departing from the spirit of the present invention also fall within the scope of application of the present invention.

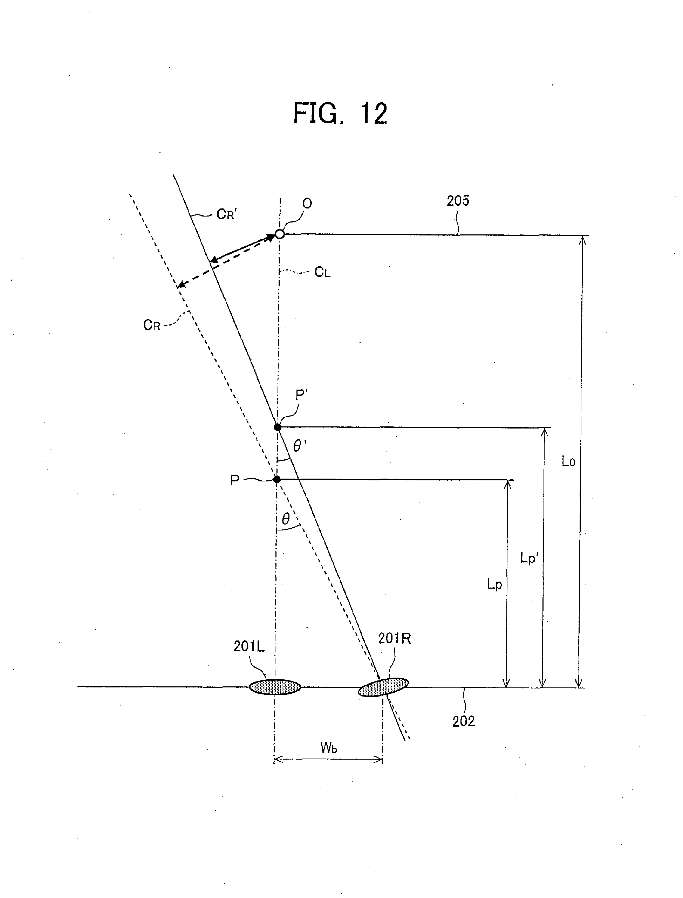

For example, even if the optical axis of one imaging apparatus of the two imaging apparatuses is perpendicular to the reference plane 202 as depicted in Fig. 12, the same effect can be acquired by performing the same conversion of an image of the other imaging apparatus having a convergent angle.

Although the process of reducing a disparity value has been described in the first and second embodiments of the present invention, this is not a limitation and a disparity value may be expanded to be displayed within a specified maximum disparity value. For example, referring to Fig. 11 described above, contrary to the embodiments, when the maximum disparity value before conversion is denoted by Dlimit, the convergent angle is adjusted such that the disparity value is set equal to or less than the specified maximum disparity value d after the conversion. In other words, the disparity value can be expanded to the specified maximum disparity value d by converting the convergent angle from θ' to θ around the convergent point P in the same technique as the technique described in the embodiments.

As a result, if it is desired to expand a disparity value, the maximum disparity value can easily be expanded to the specified maximum disparity value depending on a display size for display. With regard to such expansion of disparity value, for example, when images are viewed on a mobile stereoscopic image displaying apparatus, a small disparity value makes it difficult to feel a sense of depth; however, the expansion of the maximum disparity value to the specified maximum disparity value enables sufficient stereoscopic view even in the case of a small display.

Although the first and second embodiments of the present invention have been described by using input images having convergence, this is not a limitation and the imaging apparatuses may be in parallel arrangement. In this case, when the convergent angle is set to zero degrees, parallax can be adjusted by executing the same processes.

As described above, according to the present invention, the control of setting the maximum disparity value within the specified maximum disparity value can easily be provided in any display size.

EXPLANATIONS OF LETTERS OR NUMERALS

100...stereoscopic image converting apparatus; 101...image input apparatus; 101a...stereoscopic image-taking apparatus; 101b...reproducing apparatus; 101c, 102c...communication network; 102...image output apparatus; 102a...stereoscopic image displaying apparatus; 102b...recording apparatus; 111...photographing condition extracting portion; 112...image converting portion; 112a...convergent angle correction value calculating portion; 112b...convergent angle conversion processing portion; and 112c...relative position conversion processing portion.

**Claims**

1. A stereoscopic image converting apparatus inputting two or more images having different viewpoints to output the two or more input images with a convergent angle changed, comprising:

a photographing condition extracting portion for extracting convergent angle conversion information that is a photographing condition at the time of photographing of the two or more images; and an image converting portion for changing a convergent angle at the time of photographing of the two or more images, wherein the image converting portion includes a convergent angle correction value calculating portion that calculates a maximum disparity value of the two or more images based on convergent angle conversion information extracted by the photographing condition extracting portion and display size information of a display screen for displaying the two or more images and calculates a convergent angle correction value making the calculated maximum disparity value equal to or less than a preliminarily specified maximum disparity value, and a convergent angle conversion processing portion that generates images having a convergent angle changed from that at the time of photographing of the two or more images based on the calculated convergent angle correction value.

2. The stereoscopic image converting apparatus as defined in claim 1, wherein the image converting portion includes a relative position conversion processing portion for converting relative positions of images generated by the convergent angle conversion processing portion such that a position of a convergent point before the change in convergent angle coincides with a position of a convergent point after the change in convergent angle.

3. The stereoscopic image converting apparatus as defined in claim 1 or 2, wherein the convergent angle conversion processing portion changes a convergent angle such that the maximum disparity value of the two or more images is reduced.

4. The stereoscopic image converting apparatus as defined in any one of claims 1 to 3, wherein the preliminarily specified maximum disparity value is a viewer's pupil distance.

5. The stereoscopic image converting apparatus as defined in claim 4, wherein the viewer's pupil distance is 5 cm.

6. The stereoscopic image converting apparatus as defined in claim 1 or 2, wherein the convergent angle conversion processing portion changes a convergent angle such that the maximum disparity value of the two or more images is expanded.

7. The stereoscopic image converting apparatus as defined in any one of claims 1 to 6, wherein the photographing condition extracting portion further extracts base-line length information and field angle information at the time of photographing of the two or more images as the photographing condition, wherein the convergent angle correction value calculating portion calculates the maximum disparity value of the two or more images based on the display size information, the convergent angle conversion information, the base-line length information, and the field angle information to calculate a convergent angle correction value making the calculated maximum disparity value equal to or less than a preliminarily specified maximum disparity value.

8. The stereoscopic image converting apparatus as defined in any one of claims 1 to 7, wherein the photographing condition extracting portion extracts the photographing condition from metadata of the two or more images.

9. The stereoscopic image converting apparatus as defined in any one of claims 1 to 7, wherein the photographing condition extracting portion extracts the photographing condition based on device information identifying imaging apparatuses which photographed the two or more images by referring to a table that correlates the device information with the photographing condition.

10. A stereoscopic image displaying apparatus comprising: the stereoscopic image converting apparatus as defined in any one of claims 1 to 9.

FIG. 1

# FIG. 2

FIG. 3

FIG. 4

# FIG. 5

RATE OF DISPARITY VALUE
TO SCREEN WIDTH(%)

EP 2 629 536 A1

# FIG. 6

**IMAGE CONVERTING PORTION** — 112

Inputs:
- SPECIFIED MAXIMUM DISPARITY VALUE
- DISPLAY SIZE INFORMATION
- CONVERGENT ANGLE CONVERSION INFORMATION

112a — CONVERGENT ANGLE CORRECTION VALUE CALCULATING PORTION

LEFT CORRECTION VALUE

RIGHT CORRECTION VALUE

112b — CONVERGENT ANGLE CONVERSION PROCESSING PORTION

LEFT IMAGE → → LEFT IMAGE

RIGHT IMAGE → → RIGHT IMAGE

EP 2 629 536 A1

# FIG. 7

```
        ┌─────────────┐
        │    START    │
        └─────────────┘
               │
     S1        ▼
   ┌──────────────────────┐
   │ CALCULATE MAXIMUM    │
   │   DISPARITY VALUE    │
   │  OF LEFT AND RIGHT   │
   │       IMAGES         │
   └──────────────────────┘
               │
     S2        ▼
         ╱─────────╲
        ╱ SPECIFIED ╲
       ╱  MAXIMUM    ╲         NO
      ╲ DISPARITY VALUE ╱──────────────┐
       ╲ IS EXCEEDED   ╱               │
        ╲     ?      ╱                 │
         ╲─────────╱                   │
            │ YES                      │
     S3     ▼                  S4      ▼
   ┌────────────────┐      ┌──────────────────┐
   │   CALCULATE    │      │  SET CONVERGENT  │
   │ CONVERGENT ANGEL│     │ ANGEL CORRECTION │
   │CORRECTION VALUE│      │  VALUE TO ZERO   │
   └────────────────┘      └──────────────────┘
            │                       │
            │◄──────────────────────┘
            ▼
        ┌─────────────┐
        │     END     │
        └─────────────┘
```

# FIG. 8

# FIG. 9

# FIG. 10

IMAGE CONVERTING PORTION — 112

MAXIMUM DISPARITY VALUE INFORMATION

DISPLAY SIZE INFORMATION

CONVERGENT ANGLE INFORMATION

CONVERGENT ANGLE CORRECTION VALUE CALCULATING PORTION — 112a

RIGHT CORRECTION VALUE

LEFT CORRECTION VALUE

CONVERGENT ANGLE CONVERSION PROCESSING PORTION — 112b

LEFT IMAGE

RIGHT IMAGE

RELATIVE POSITION CONVERSION PROCESSING PORTION — 112c

LEFT IMAGE

RIGHT IMAGE

LEFT IMAGE

RIGHT IMAGE

# FIG. 11

# FIG. 12

# FIG. 13

(A)

(B)

# FIG. 14

| **INTERNATIONAL SEARCH REPORT** | International application No. |
| --- | --- |
| | PCT/JP2011/073081 |

**A. CLASSIFICATION OF SUBJECT MATTER**
*H04N13/04*(2006.01)i, *G06T1/00*(2006.01)i

According to International Patent Classification (IPC) or to both national classification and IPC

**B. FIELDS SEARCHED**

Minimum documentation searched (classification system followed by classification symbols)
H04N13/04, G06T1/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 08-009421 A (Sanyo Electric Co., Ltd.), 12 January 1996 (12.01.1996), entire text; all drawings (Family: none) | 1-10 |
| A | JP 2004-007395 A (Sanyo Electric Co., Ltd.), 08 January 2004 (08.01.2004), entire text; all drawings & US 2005/0089212 A1 & EP 1489857 A1 & WO 2003/081921 A1 & CN 1643939 A | 1-10 |
| A | JP 2005-073049 A (Sharp Corp.), 17 March 2005 (17.03.2005), entire text; all drawings & US 2006/0290778 A1 & EP 1662809 A1 & WO 2005/020591 A1 & KR 10-2006-0087511 A & CN 1864415 A | 1-10 |

☒ Further documents are listed in the continuation of Box C. ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 07 December, 2011 (07.12.11) | 20 December, 2011 (20.12.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/073081

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2008-109267 A  (Sharp Corp.),<br>08 May 2008 (08.05.2008),<br>entire text; all drawings<br>(Family: none) | 1-10 |

Form PCT/ISA/210 (continuation of second sheet) (July 2009)

**EP 2 629 536 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8009421 A